Europäisches Patentamt

European Patent Office

Office européen des brevets

(11) Veröffentlichungsnummer: **0 513 944 A2**

# (12) EUROPÄISCHE PATENTANMELDUNG

(21) Anmeldenummer: **92250086.3**

(22) Anmeldetag: **15.04.92**

(51) Int. Cl.5: **B01D 21/01**

(30) Priorität: **16.04.91 DE 9104763 U**

(43) Veröffentlichungstag der Anmeldung:
**19.11.92 Patentblatt 92/47**

(84) Benannte Vertragsstaaten:
**DE FR IT NL**

(71) Anmelder: **MANNESMANN Aktiengesellschaft**
**Mannesmannufer 2**
**W-4000 Düsseldorf 1(DE)**

(72) Erfinder: **Brüll, Werner**
**Schwalmstrasse 17**
**W-4000 Düsseldorf(DE)**
Erfinder: **Frese, Elmar**
**Burgmüllerstrasse 46**
**W-4000 Düsseldorf(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Vorrichtung zum Reinigen von Kreislaufflüssigkeiten.**

(57) Die Erfindung betrifft ein Verfahren zum Reinigen von Kreislaufflüssigkeiten und Abwässern, insbesondere von Kühl- und Schmiermitteln aus Arbeitsprozessen, bei dem die mit Feststoffpartikeln angereicherte zu reinigende Flüssigkeit in einen Arbeitsbehälter eingeleitet und dort mit einem Flockungsmittel behandelt wird, welches die Partikel bindet und zu Flocken aufbereitet zu Boden sinken läßt, von wo aus die verdichteten Flocken abgezogen und außerhalb des Arbeitsbehälters aus der Kreislaufflüssigkeit ausgefiltert werden. Um ein Verfahren und eine Vorrichtung zur Durchführung des Verfahrens zum Reinigen von Kreislaufflüssigkeiten und Abwässern zu schaffen, mit dem die kontinuierliche Reinigung zur Erzielung einer gleichmäßig niedrigen Schmutzkonzentration ermöglicht wird, wird vorgeschlagen, daß die Kreislaufflüssigkeit unter gleichzeitiger kontinuierlicher Zufuhr des Flockungsmittels über eine Mischstrecke dem Arbeitsbehälter zugeführt wird, in der unter Durchmischung von Kreislaufflüssigkeit und Flockungsmittel die Flockenbildung einsetzt, die sich im Arbeitsbehälter fortsetzt, wobei bei geringer Durchströmungsgeschwindigkeit durch den Arbeitsbehälter die Flocken mit den gebundenen Partikeln zu Boden sinken und die gereinigte Flüssigkeit im oberen Bereich des Arbeitsbehälters an einer dem Zulauf der zu reinigenden Flüssigkeit fernen Seite abgezogen wird, während der aus mit Partikeln angereicherten Flocken und die Kreislaufflüssigkeit bestehende Dünnschlamm kontinuierlich zum Boden des Arbeitsbehälters abgezogen und einem Filter zum Abscheiden der rückzuführenden Kreislaufflüssigkeit zugeführt wird.

Fig. 1

EP 0 513 944 A2

Die Erfindung betrifft eine Vorrichtung zum Reinigen von Kreislaufflüssigkeiten und Abwässern, insbesondere von Kühl- und Schmiermitteln aus Arbeitsprozessen, bei dem die mit Feststoffpartikeln angereicherte zu reinigende Flüssigkeit in einen Arbeitsbehälter eingeleitet und mit einem Flockungsmittel behandelt wird, welches die Partikel bindet und zu Flocken aufbereitet zu Boden sinken läßt, von wo aus die verdichteten Flocken abgezogen und außerhalb des Arbeitsbehälters aus der Kreislaufflüssigkeit ausgefiltert werden.

Derartige Reinigungssysteme finden beispielsweise bei Glasbearbeitungsprozessen zur Aufbereitung der Kühlmittel Verwendung, sie dienen der Aufbereitung von Abwässern aus Spülvorgängen, Gleitschleifoperationen, der Keramikbearbeitung etc.. Die im Kreislauf umlaufende Flüssigkeit ist gewöhnlich mit feinstem Abrieb angereichert, der aus der Flüssigkeit zu entfernen ist.

Bei einem bekannten Verfahren und einer Vorrichtung zur Durchführung des Verfahrens wird von einer Maschine kommender Kühlschmierstoff einem Arbeitsbehälter zugeführt, in dem von Zeit zu Zeit eine Reaktion mit einem dann zugeführten Flockungsmittel eingeleitet wird. Der Arbeitsbehälter weist ein Rührwerk zum homogenen Durchmischen der mit Abrieb angereicherten Flüssigkeit auf, um eine möglichst optimale Reaktion mit dem Flockungsmittel herbeizuführen. Aus der bekannten Anlage wird der aus Flockungsmittel, Abriebpartikeln und Kühlschmierflüssigkeit gebildete Dünnschlamm abgezogen und einem Bandfilter zugeleitet, dar unterhalb des Arbeitsbehälters angeordnet ist.

Die bekannte Arbeitsweise und Vorrichtung arbeitet diskontinuierlich und erfordert deshalb Stillstandszeiten zur Reinigung des Kühlschmierstoffes. Die Schmutzkonzentration im Fluid schwankt daher in Abhängigkeit von der Anzahl der Reinigungs-Zyklen.

Davon ausgehend liegt der vorliegenden Erfindung die Aufgabe zugrunde, eine Vorrichtung zum Reinigen von Kreislaufflüssigkeiten und Abwässern zu schaffen, mit der die kontinuierliche Reinigung zur Erzielung einer gleichmäßig niedrigen Schmutzkonzentration ermöglicht wird.

Zur Lösung dieser Aufgabe wird eine Vorrichtung vorgeschlagen, die gekennzeichnet ist durch einen Arbeitsbehälter mit Spitzboden, dem die zu reinigende Flüssigkeit über einen Anschluß zuführbar ist, der in einem innerhalb des Arbeitsbehälters gebildeten, mit labyrinthartigen Leitblechen versehenen Kanal mündet, in den über mindestens einen weiteren Anschluß ein Flockungs- und ggfs. ein Filterhilfsmittel einleitbar ist; daß innerhalb des Arbeitsbehälters mehrere ein Absinken der Flocken begünstigende, die Durchströmung beruhigende Leitbleche vorgesehen sind und daß an der dem Kanal abgewandten Seite des Arbeitsbehälters in dessen oberem Bereich ein Absaugstutzen für die gereinigte Flüssigkeit vorgesehen ist, dem eine Filtrat-Nachbehandlungsanlage vorgeordnet ist.

Mit einem solchen Behälter wird es in günstiger Weise möglich, ohne Arbeitsunterbrechung in kontinuierlicher Folge zusammen mit der zu reinigenden Flüssigkeit das Flockungsmittel zuzuführen, welches in der erfindungsgemäß innerhalb des Behälters angeordneten Durchmischungsstrecke ausflockt und mit der Bindung der Partikel der Kreislaufflüssigkeit beginnt. Dieses Flocken setzt sich innerhalb des Arbeitsbehälters fort und wird begünstigt durch die Strömungsführung der zu reinigenden Flüssigkeit innerhalb des Behälters, die durch Leitbleche oder Platten erzwungen wird. Letztere sind so angeordnet, daß einerseits eine günstige Durchmischung der Flüssigkeit mit dem Flockungsmittel zwecks Aufnahme der Partikel erfolgt und andererseits die mit Partikeln angereicherten Flocken möglichst zu einem frühen Zeitpunkt auf den Behälterboden absinken, von wo aus sie abgesaugt werden.

Nach einem günstigen Vorschlag dar Erfindung ist oberhalb des Arbeitsbehälters ein Filter für den im Spitzbodenbereich des Arbeitsbehälters abgezogenen Dünnschlamm vorgesehen, von dem aus die sedimentierte Kreislaufflüssigkeit unmittelbar in den Arbeitsbehälter rückführbar ist. Bei diesem Filter kann es sich um einen bekannten Unterdruckfilter mit zwei voneinander getrennten Unterdruckkammern handeln, der mit einem Filtermittel in bekannter Weise die Feststoffe austrägt und die sedimentierte Kreislaufflüssigkeit dem Arbeitsbehälter zuführt. Gleichsam sind andere Filter wie Schwerkraftfilter, Druckbandfilter, Bandpressen, Kammerfilterpressen und ähnliches denkbar.

In einer besonders günstigen Ausgestaltung der Erfindung ist vorgesehen, daß die Filtrat-Nachbehandlungsanlage aus einem innerhalb der Kreislaufflüssigkeit angeordneten Behälter besteht, an dessen Inneres der Absaugstutzen für die gereinigte Flüssigkeit angeschlossen ist, wobei der Boden dieses Behälters flüssigkeitsdurchlässig von einem feinste Feststoffe zurückhaltenden Filtermittel bedeckt ist. Dieser Behälter stellt sicher, daß feinste Abriebstoffe und Schlammanteile, die nicht sidimentiert sind, zurückgehalten werden. Der durch die Filtrat-Nachbehandlungsanlage geschaffene Filter arbeitet sehr einfach; ein um den beispielsweise als Lochblech ausgebildeten Boden des Behälters geführtes Filterband wird taktweise vorgeschoben, wenn Sensoren signalisieren, daß das Filterband verschmutzt ist. Zusätzlich kann ein Überlauf vorgesehen sein, der die Anlage vor Verstopfung absichert.

Die durch die Erfindung vorgeschlagene Vorrichtung zum Reinigen von Kreislaufflüssigkeiten und Abwässern ist in besondere Weise geeignet, modulartig zu einer Gesamtanlage zusammengesetzt zu werden. Je nach Bedarf und Größe der erforderlichen Anlage können die gleichartig ausgebildeten Behälter miteinander verbunden werden.

Ein Ausführungsbeispiel der Erfindung ist in der Zeichnung dargestellt und wird nachfolgend beschrieben. Es zeigt:

Fig. 1     einen vereinfachten Querschnitt durch die erfindungsgemäße Vorrichtung,

Fig. 2     eine Draufsicht auf den Arbeitsbehälter nach Figur 1,

Fig. 3     einen Querschnitt durch den Arbeitsbehälter im Bereich der Filtrat-Nachbehandlungsanlage und

Fig. 4     eine Mehrfachanordnung erfindungsgemäßer Arbeitsbehälter.

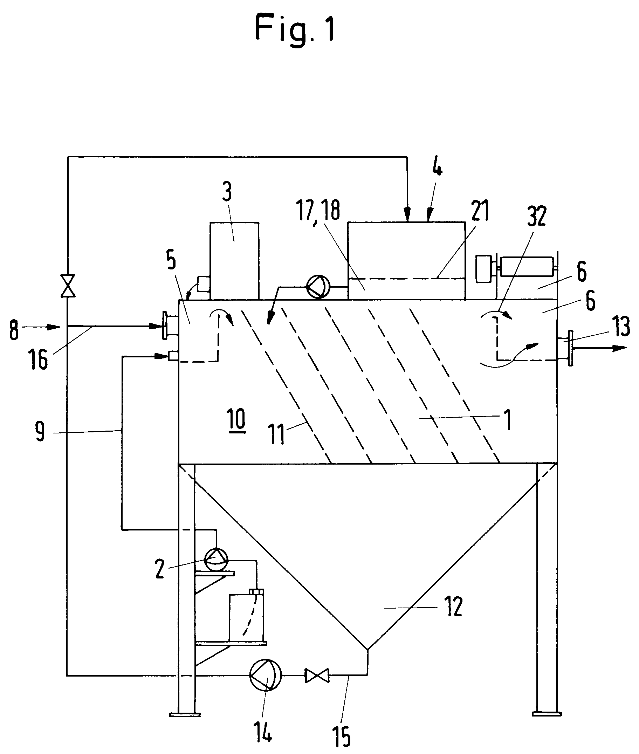

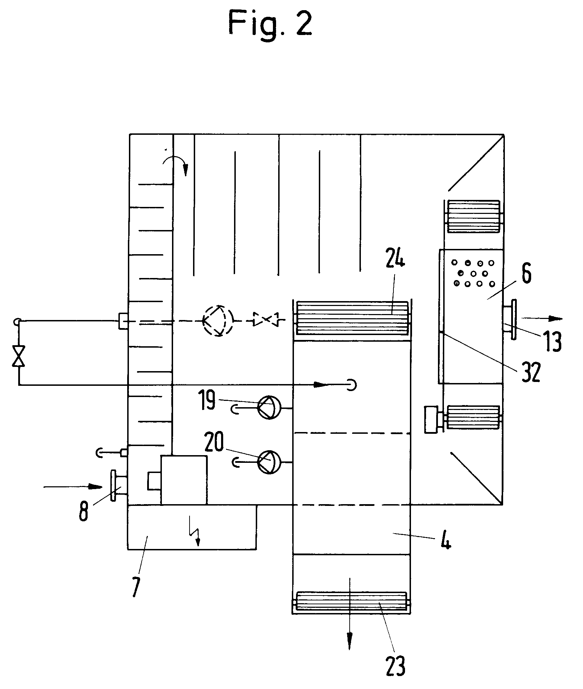

Die in Figur 1 im Querschnitt schematisch dargestellte erfindungsgemäße Vorrichtung besteht im wesentlichen aus dem Arbeitsbehälter 1, den Dosierstationen für Flockungsmittel 2 und Filterhilfsmittel 3, der Filteranlage 4 für den Dünnschlamm, der Mischstrecke 5, der Vorrichtung zur Filtrat-Nachbehandlung 6 sowie dem aus Figur 2 ersichtlichen Elektro-Schaltschrank 7. Des weiteren gehören zur Vorrichtung mehrere Pumpen, Ventile und Rohrleitungen, die im folgenden in der Funktionsbeschreibung näher bezeichnet sind.

Funktionsbeschreibung:

Die zu reinigende Flüssigkeit tritt bei 8 in den Arbeitsbehälter ein und durchströmt zunächst die Mischstrecke S. Diese ist, wie aus Figur 2 ersichtlich, mit labyrinthartig angeordneten Leitblechen versehen, durch die die zu reinigende Flüssigkeit unter Bildung von Turbulenzen geführt ist. Gleichzeitig werden der zu reinigenden Flüssigkeit zu Beginn der Mischstrecke 5 flüssige Flockungsmittel aus der Dosierstation 2 über eine Leitung 9 und ggfs. pulveriges Filterhilfsmittel aus der Dosierstation 3 zugegeben.

In der Mischstrecke 5 reagieren die beteiligten Inhaltsstoffe der zu reinigenden Flüssigkeit miteinander und bilden Flocken, die sich vorzugsweise in der Zone 10 des Arbeitsbehälters 1 entwickeln.

Durch die Dichtezunahme der Flocken, die geringe Strömungsgeschwindigkeit und durch die Leitbleche 11 begünstigt, sinken die Flocken ab und verdichten sich zu einem Dünnschlamm in der Zone 12 des Arbeitsbehälters 1. Die zunehmend saubere Flüssigkeit durchströmt den Behälter 1 und tritt gesäubert bei 13 aus.

Da kleinste Schwebflocken nie ganz verhindert werden können, ist vor dem Absaugstutzen 13 eine Filtrat-Nachbehandlung 6 angeordnet, die später noch im einzelnen beschrieben wird.

Der in der Zone 12 angesammelte Dünnschlamm wird durch eine Pumpe 14 und die Leitung 15 einer Filteranlage 4 zugeführt, die vorzugsweise als Unterdruckfilteranlage mit einem Filtermittel 24 ausgerüstet ist. Ein Teilstrom des Dünnschlammes wird über die Leitung 16 dem Einlauf zugegeben, um eine optimale Ausnutzung der Flockungsmittel zu erreichen.

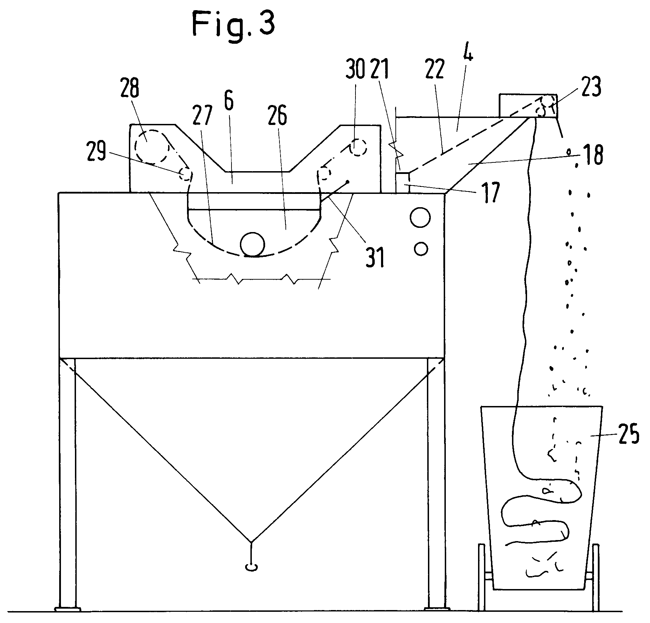

Die Filteranlage 4 besitzt zwei voneinander getrennte Unterdruckkammern 17 und 18, aus denen geeignete Pumpen, vorzugsweise Druckluft-Membran-Pumpen 19 und 20 die filtrierte Flüssigkeit absaugen und diese dem System nahe der Mischstrecke 5 wieder zuführen. Die Pumpe 19 saugt dabei durch den Filterboden 21 vornehmlich das Filtrat ab, während die Pumpe 20 unterhalb der Austrageschräge 22 (Figur 3) den Filterkuchen trocknet, der durch Vortakten des Filtermittels 24 bei 23 abgeworfen wird und in einem Container 25 gesammelt wird.

Wie ebenfalls aus Figur 3 ersichtlich, besteht die Vorrichtung zur Filtrat-Nachbehandlung 6 aus einem Gehäuse 26, an seiner Unterseite 27 vorzugsweise in Lochblech ausgeführt. Ein Filtermittel 28 wird über eine Umlenkung 29 unterhalb des Bodens 27 unter Spannung hindurchgeführt und bei 30 aufgewickelt. Die Taktzeit erfolgt automatisch durch Messen des Flüssigkeits-Niveaus im Behälter 1. Ist die Filterfläche bei 27 durch Feinstflocken blockiert und somit kein hinreichender Abfluß bei 13, so steigt das Flüssigkeits-Niveau im Sedimentationsbehälter 1 an.

Geeignete, nicht dargestellte Sensoren geben ein Signal, damit automatisch das Filtermittel 28 um einen wählbaren Abschnitt von der Austragvorrichtung 30 vorgezogen wird. Die Feinstflocken werden durch eine Abstreifvorrichtung 31 abgestreift und sinken in die Zone 12 des Behälters 1, von wo sie zusammen mit dem Dünnschlamm abgesaugt werden. Bei 32 ist ein Notüberlauf dargestellt.

Alle Funktionen der erfindungsgemäßen Vorrichtung sind im zeitlichen Ablauf einstellbar; sie werden durch die elektrische Steuerung im Schaltschrank 7 vollautomatisch, ausgeführt und überwacht.

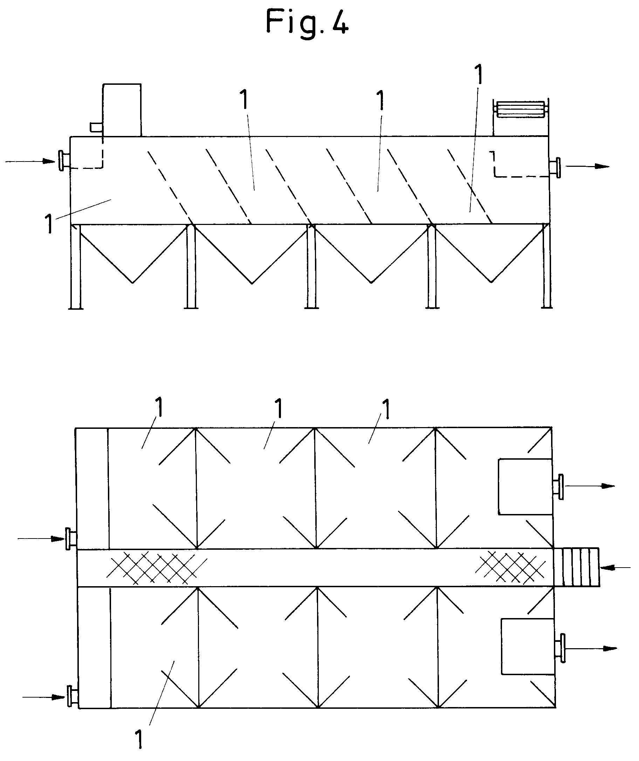

Die vorstehend beschriebene Vorrichtung stellt einen Modul dar, der bei Bedarf parallel oder in Reihe hintereinandergestellt zu einer größeren Behandlungsanlage kombiniert worden kann. Dadurch wird eine kostengünstige Anpassung an unterschiedliche Volumenströme und Sedimentationseigenschaften der Schmutzstoffe erreicht. Wie in Figur 4 schematisch dargestellt, entfallen bei einer solchen Zusammenfassung die entsprechenden Zwischenwände der Behälter. Funktionsrelevante Komponenten können ggfs. nur einmal ausgeführt sein.

**Patentansprüche**

1. Vorrichtung zum Reinigen von Kreislaufflüssigkeiten und Abwässern, insbesondere von Kühl- und Schmiermitteln aus Arbeitsprozessen, bei dem die mit Feststoffpartikeln angereicherte zu reinigende Flüssigkeit in einen Arbeitsbehälter eingeleitet und dort mit einem Flockungsmittel behandelt wird, welches die Partikel bindet und zu Flocken aufbereitet zu Boden sinken läßt, von wo aus die verdichteten Flocken abgezogen und außerhalb des Arbeisbehälters aus der Kreislaufflüssigkeit ausgefiltert werden, **gekennzeichnet durch,** einen Arbeitsbehälter (1) mit Spitzboden, dem die zu reinigende Flüssigkeit über einen Anschluß (8) zuführbar ist, der in einem innerhalb des Arbeitsbehälters (1) gebildeten, mit lybyrinthartigen Leitblechen versehenen Kanal (5) mündet, in den über mindestens einen weiteren Anschluß (9) ein Flockungs- und ggf. ein Hilfsmittel einleitbar ist, daß innerhalb des Arbeits behälters (1) mehrere ein Absinken der Flocken begünstigende, die Durchströmung beruhigende Leitbleche (11) vorgesehen sind und daß an der dem Kanal (5) abgewandten Seite des Arbeitsbehälters (1) in dessen oberen Bereich ein Absaugstutzen (13) für die gereinigte Flüssigkeit vorgesehen ist, dem eine Filtrat-Nachbehandlungsanlage (6) vorgeordnet ist.

2. Vorrichtung nach Anspruch 1, **dadurch gekennzeichnet,** daß oberhalb des Arbeitsbehälters (1) ein Filter (4) für den im Spitzbodenbereich (12) des Arbeitsbehälters (1) abgezogenen Dünnschlamm vorgesehen ist, von dem aus die sedimentierte Kreislaufflüssigkeit unmittelbar in den Arbeitsbehälter (1) zurückführbar ist.

3. Vorrichtung nach Anspruch 1, **dadurch gekennzeichnet,** daß die Filtrat-Nachbehandlungsanlage (6) aus einem innerhalb der Kreislaufflüssigkeit angeordneten Behälter besteht, an dessen Inneres der Absaugstutzen (13) für die gereinigte Flüssigkeit angeschlossen ist, wobei der Boden (27) dieses Behälters flüssigkeitsdurchlässig von einem feinste Feststoffe zurückhaltenden Filtermittel (28) bedeckt ist.

4. Vorrichtung nach Anspruch 1 bis 3, **dadurch gekennzeichnet,** daß mehrere aufeinander abgestimmte Arbeitsbehälter (1) modulartig - parallel oder in Reihe - zusammenstellbar sind.

# Fig. 1

# Fig. 2

# Fig.3

# Fig. 4